# EUROPÄISCHE PATENTANMELDUNG

(11) **EP 2 530 052 A1**
(43) Veröffentlichungstag der Anmeldung: **05.12.2012**
(21) Anmeldenummer: 11168416.3
(22) Anmeldetag: 01.06.2011
(51) Int. Cl.: C01B 33/107

(54) **Verfahren zur Herstellung von Siliziumtetrachlorid und Verfahren zur Herstellung von Solarsilizium**

(71) Anmelder: HEI Eco Technology, 1140 Wien (AT)
(72) Erfinder: Hornbachner, Dieter, 1140 Wien (AT); Kryvoruchko, Vitaliy, 1140 Wien (AT)
(74) Vertreter: HOFFMANN EITLE

(57) **Zusammenfassung**

Ein Verfahren zur Herstellung von Siliziumtetrachlorid (STC), umfassend die Chlorierung einer Siliziumquelle, ausgewählt aus Ferrosilizium und/oder metallurgischem Silizium, in einer Alkalichlorid-Schmelze bei einer Temperatur im Bereich von deren Schmelztemperatur bis 900°C in einem Chlorierungsreaktor, wobei der Alkalichlorid-Schmelze kontinuierlich oder intermittierend Alkalichlorid und Siliziumquelle in einer solchen Weise zugeführt werden, dass in der Reaktionsmischung im Reaktor stets ein mehrfacher molarer Überschuss an Alkalichlorid gegenüber Eisen (Fe) vorliegt, vorzugsweise in einem Molverhältnis von Alkalichlorid zu Eisen von ≥ 45:1, und weiter bevorzugt ≥ 48:1.
Ferner wird erfindungsgemäß ein Verfahren zur Herstellung von Solarsilizium (SG-Si) bereitgestellt.

## Beschreibung

Die Erfindung betrifft ein Verfahren zur Herstellung von Siliziumtetrachlorid, und insbesondere ein Verfahren zur Herstellung von technischem Siliziumtetrachlorid mit erhöhter Reinheit. Dadurch kann der erforderliche Aufwand zur Reinigung des Siliziumtetrachlorids vor dessen Einsatz als Ausgangsstoff zur Herstellung von Trichlorsilan und in weiterer Folge von Polysilizium deutlich verringert werden. Des Weiteren umfasst die Erfindung ein Verfahren zur Herstellung von Solar- und Halbleitersilizium.

### Stand der Technik

Die im Bereich der Photovoltaik (PV) verwendeten Solarzelle basieren weit überwiegend auf Silizium, wobei zwischen mono- und polykristalliner Siliziumtechnik unterschieden wird. Etwa 95 % aller PV-Anlagen werden derzeit auf Basis von Siliziumsolarzellen hergestellt (F. Goldbach, Analyse *der Supply-Chain-Strukturen der Photovoltaik-Industrie*, 2010). Hierfür wird hochreines Solarsilizium (*solar grade silicon,* SG-Si) benötigt.

Derzeit werden ungefähr 75 % der gesamten Produktion an (polykristallinem) SG-Si nach dem sogenannten "Siemens-Verfahren" gewonnen. Als Ausgangsstoff in diesem Verfahren wird metallurgisches Silizium (*MG-Si*) mit einer Reinheit von ≥ 98,8 Gew.-% eingesetzt. MG-Si mit dieser Reinheit wird durch eine karbathermische Reduktion von Kieselsäure mit hochreiner Aktivkohle im elektrischen Ofen erzeugt. Dieses Verfahren erfordert einen hohen Einsatz an Energie und hochreiner Aktivkohle, wodurch die Herstellungskosten von MG-Si hoch sind. Zudem kommt es bei dieser Siliziumqualität aufgrund der steigenden Nachfrage zunehmend zu Lieferengpässen.

Auf dem Weg zur Erzeugung von SG-Si wird das MG-,Si (Reinheit ≥ 98,8 Gew.-%) katalytisch mit Chlorwasserstoff (HCl) zu Trichlorsilan (SiHCl₃, kurz TCS) umgesetzt. Dieses TCS hat einen Reinheitsgrad von ≥ 99,999999 %. Auch die Herstellung von TCS ist mit hohem Energieaufwand und Investitionen verbunden, und trägt rund 35 % der gesamten Produktionskosten für SG-Si bei.

Die Erzeugung von SG-Si erfolgt meistens nach dem "Siemens"-Verfahren, bei dem Trichlorsilan(TCS)-Gas in Gegenwart von Wasserstoff reduziert wird und auf einem geheizten Siliziumelement abgeschieden wird. In so einem Verfahren wird nur etwa 1/4 des Siliziums, das als TCS zugeführt wird, als elementares Silizium abgeschieden, wobei der Rest als ein Dampfgasgemisch (bestehend typischerweise aus 50 Gew.-% nicht umgesetztem TCS, 35 Gew.-% Siliziumtetrachlorid (STC) sowie Wasserstoff, Chlor und anderen Silanen) den Siemensreaktor verlässt und wieder der Hydrierung zugeführt wird. Ein solches Verfahren ist z.B. in EP-A-1 437 327 beschrieben.

Somit werden in einer Anlage mit einer Produktionsleistung von 300 kg SG-Si/h ca. 18 t/h Dampfgasgemisch zwischen dem Siemens reaktor und der Hydrierungsanlage bewegt. Dabei werden für die Zuspeisung des Systems nur 1,5 t/h zusätzliches TCS benötigt.

Die Nachteile des klassischen Siemens-Verfahrens sind somit einerseits die hohen Kosten für MG-Si als Ausgangsmaterial und andererseits die hohen Investitions- und Betriebskosten für die Anlagen zur Produktion und Reinigung von beiden Chlorierungsprodukten TCS und STC. Nach der derzeitigen Lage werden sich diese Kosten, insbesondere die Rohstoffpreise für MG-Si, in Zukunft weiter erhöhen. Alternative, kostengünstige Verfahren zur Erzeugung von SG-Si aus ggf. anderen Rohstoffen sind daher wünschenswert.

Wie bereits erwähnt, kann TCS durch Hydrierung von STC hergestellt werden. Somit könnte für die Zuspeisung des Systems auch STC verwendet werden. Das nach bislang bekannten Verfahren produzierte STC ist jedoch von geringer Reinheit und kann erst nach aufwändiger Reinigung als Ausgangsmaterial zur Produktion von TCS eingesetzt werden. Dadurch ist dieser Weg derzeit keine kommerziell interessante Alternative.

So ist beispielsweise ein Verfahren zur Herstellung von Siliziumtetrachlorid aus RU-B-136 329 und eine Weiterentwicklung desselben aus RU-B-181 633 bekannt. Nach diesen Verfahren wird Ferrosilizium bei einer Temperatur von 600-800°C in einer Schmelze aus Eisenchlorid und Alkalichlorid (NaCl + KCl) unter Bildung von STC und Eisenchlorid chloriert. Die Zugabe von Ferrosilizium erfolgt gleichzeitig mit der Zugabe von Alkalichlorid, wobei die zugeführte Menge an Alkalichlorid der Menge an gebildetem Eisenchlorid entspricht bzw. deutlich unter dem Ferrosiliziumanteil in der Schmelze liegt. Diese Verfahren ermöglichen gute Bedingungen für die Chlorierung sowie hohe Produktionsleistungen.

Die Zugabe von Alkalichlorid (NaCl+KCl) in die Schmelze in einer zum gebildeten Eisenchlorid äquivalenten oder geringeren Menge (Gewichtsverhältnis) wie in RU-B-136 329 und RU-B-181 633 beschrieben, führt zur Bildung von großen Mengen an FeCl₃. Da dieses eine erhöhte Flüchtigkeit besitzt, entweicht es gasförmig aus der Schmelze und vermischt sich mit dem ebenfalls gasförmig aus der Schmelze entweichendem STC. Daher wird das gewünschte Produkt STC mit als Nebenprodukt gebildeten leichtflüchtigen Chloriden, insbesondere Eisenchloride, verunreinigt. Aufgrund dieses wesentlichen Nachteils haben diese Verfahren bisher keine industrielle Nutzung gefunden.

Im Licht der oben beschriebenen, im Stand der Technik auftretenden Probleme ist die Aufgabe der vorliegenden Erfindung die Bereitstellung eines Verfahrens zur Herstellung von STC mit erhöhter Reinheit, wodurch der erforderliche Aufwand zur Reinigung des STC vor dessen Einsatz als Ausgangsstoff zur Herstellung vom Polysilizium deutlich verringert werden kann.

### Erfindungsgemäßes Verfahren

Erfindungsgemäß wird diese Aufgabe gelöst durch ein Verfahren zur Herstellung von Siliziumtetrachlorid, umfassend die Chlorierung einer Siliziumquelle, ausgewählt aus Ferrosilizium oder metallurgischem Silizium, in einer Alkalichlorid-Schmelze bei einer Temperatur im Bereich von deren Schmelztemperatur bis 900°C in einem Chlorierungsreaktor, wobei der Alkalichlorid-Schmelze kontinuierlich oder intermittierend Alkalichlorid und Siliziumquelle in einer solchen Weise zugeführt werden, dass in der Reaktionsmischung im Reaktor stets ein molarer Überschuss an Alkalichlorid gegenüber Eisen (Fe) vorliegt.

Des Weiteren betrifft die Erfindung ein Verfahren zur Herstellung von Solarsilizium (SG-Si), das folgende Schritte umfasst :
(i) die Herstellung von STC nach dem erfindungsgemäßen Verfahren;
(ii) die Umsetzung des erhaltenen STC zu TCS durch Hydrierung; und
(iii) die Umsetzung des erhaltenen TCS zu SG-Si.

Bevorzugte Ausführungsformen des erfindungsgemäßen Verfahrens werden nachfolgend ausführlich dargestellt und sind in den beigefügten abhängigen Ansprüchen definiert.

In dem erfindungsgemäßen Verfahren zur Herstellung von STC ist das Molverhältnis von Alkalichlorid zu Eisen in der Reaktionsmischung im Reaktor vorzugsweise stets ≥ 47, und weiter bevorzugt ≥ 50.

Die erfindungsgemäßen Molverhältnisse von Alkalichlorid zu Eisen können beispielsweise dadurch erreicht werden, dass das der Reaktionsmischung im Reaktor zugeführte Reaktionsmateriai (Siliziumquelle und Alkalichlorid) einen Überschuss (Molverhältnis) an Alkalichlorid gegenüber dem in der Siliziumquelle vorhandenen Eisen von vorzugsweise ≥ 45:1, und weiter bevorzugt ≥ 48:1 und noch weiter bevorzugt 49:1 aufweist.

Die Obergrenze des Molverhältnisses ist nicht kritisch, d.h. auch bei einem sehr hohen Molverhältnis kann das erfindungsgemäße Verfahren erfolgreich durchgeführt werden.

Allerdings kann in Abhängigkeit von der verwendeten Siliziumquelle bei hohen Molverhältnissen die erforderliche Menge an zuzuführendem Alkalichlorid sehr groß werden, ohne dass dieses zu einer weiteren deutlichen Verbesserung der Ergebnisse des erfindungsgemäßen Verfahrens führt. Ein sehr hohes Molverhältnis ist daher aus wirtschaftlichen Gründen wenig sinnvoll, und vorzugsweise wird das Molverhältnis von Alkalichlorid zu Eisen im zugeführten Reaktionsmaterial bei ≤ 53:1, weiter bevorzugt ≤ 50:1 und insbesondere bei 49:1 gehalten.

Nach Bedarf kann aber von diesen Zugabeverhältnissen abgewichen werden und der Überschuss an Alkalichlorid kann erhöht werden, wenn sich die gewünschte Qualität des erhaltenen STC nicht durch ein 2ugabeverhäitnis im oben genannten Bereich einstellen lässt.

Im erfindungsgemäßen Verfahren wird die Gesamtbilanz der Chlorierunasreaktion durch den Überschuss an freiem Alkalichlorid gegenüber Eisen in der Schmelze positiv beeinflusst, und insbesondere die Bildung von flüchtigem FeCl₃ wird unterdrückt. Dadurch wird das als gasförmiges Produkt über der Reaktionsmischung anfallende STC weniger durch Nebenprodukte und insbesondere eisenhaltige Nebenprodukte verunreinigt. Dadurch wird eine höhere Produktqualität erzielt. Der sich daraus ergebende geringere Aufwand zur Reinigung des Produkts ist neben der Möglichkeit, günstigere Ausgangsmaterialien verwenden zu können, ein weiterer Vorteil der Erfindung.

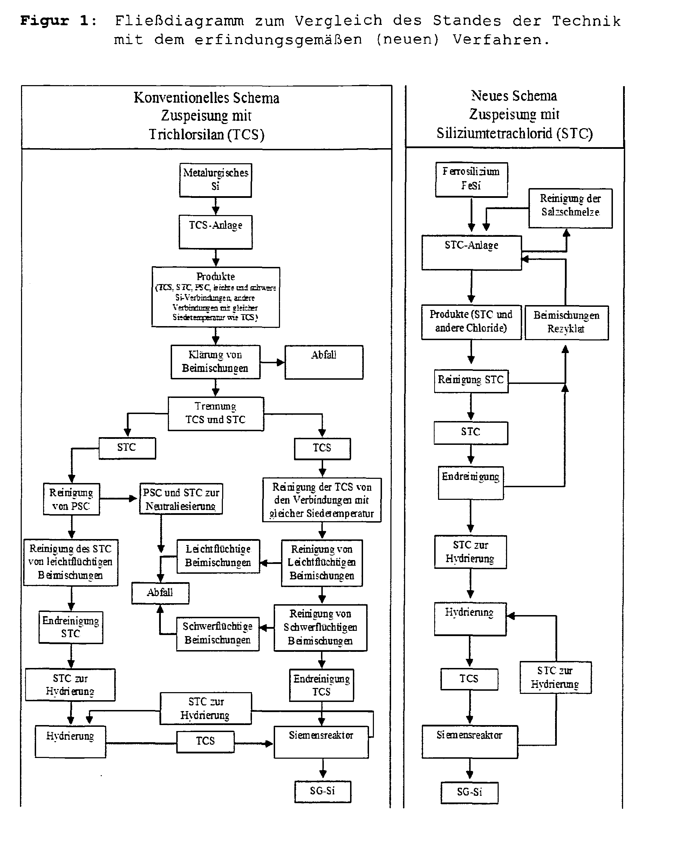

Einen Vergleich eines herkömmlichen Verfahrens zur Herstellung von SG-Si unter Verwendung von MG-Si als Ausgangsmaterial mit einer Ausführungsform des erfindungsgemäßen Verfahrens zur Herstellung von SG-Si unter Verwendung von z.B. Ferrosilizium als kostengünstigem Ausgangsmaterial ist schematisch in Figur 1 gezeigt. Wie man sieht, wird durch das erfindungsgemäße Verfahren der Gesamtprozess wesentlich vereinfacht.

Ebenso zeigt Fig. 1, dass im herkömmlichen Verfahren zahlreiche Reinigungsschritte erforderlich sind, in denen unterschiedliche Nebenprodukte und Abfälle anfallen, die aufwändig neutralisiert und entsorgt werden müssen, wobei ein Teil davon als Kieselsäure wiederverwertet wird.

Mehrheitlich fallen im bekannten Verfahren Flüssigabfälle an, die durch Reaktion mit NaOH oder Ca(OH)₂ neutralisiert werden müssen. Als Feststoffe fallen Stäube an, die mit giftigen Polysilanverbindungen angereichert sind. Diese Feststoffe müssen verbrannt werden. Diese Art der Abfallentsorgung erfordert eine interne Entsorgungsanlage, die hohe Investitions- und Betriebskosten verursacht.

Demgegenüber können im erfindungsgemäßen Verfahren alle Abfälle, die bei der Reinigung von STC entstehen (z.B. Staub, Polysilanverbindungen und abgetrenntes Siliziumtetrachlorid), in den Chlorierungsreaktor zurückgeführt werden. Damit wird zum einen die Schmelze gekühlt und zum anderen werden die siliziumhaltigen Bestandteile erneut der Umsetzung zu STC zugeführt. Nach der Sättigung der Salzschmelze mit Verunreinigungen (Eisen, Aluminium etc.) kann diese schrittweise abgeführt und kontrolliert abgekühlt werden. Die so anfallende Salzschmelze kann deponiert oder in der Chlorindustrie wiederverwertet werden.

In dem aus dem Stand der Technik bekannten Verfahren ist dagegen die Rückführung von festen, flüssigen oder gasförmigen siliziumhaltigen Abfällen in den Chlorierungsreaktor nicht möglich, was einen erhöhten Einsatz an Rohstoffen erfordert.

Des weiteren kann in dem erfindungsgemäßen Verfahren die Alkalichloridschmelze aufgrund ihrer gegenüber dem Stand der Technik veränderten Zusammensetzung als Filter für diverse Verunreinigungen dienen, d.h. die Verunreinigungen werden in der Schmelze festgehalten und werden nicht mit dem gebildeten Siliziumtetrachlorid in das Produktgas freigesetzt. Auch dadurch weist das Produktgas eine höhere Reinheit auf als in den bisher bekannten Verfahren.

Das für die Schmelze und zur Zuführung mit dem Ferrosilizium verwendete Alkalichlorid ist nicht sonderlich beschränkt. In der Praxis sind vorzugsweise NaCl und KCl und beliebige Mischungen daraus bevorzugt. Besonders bevorzugt sind äquimolare Mischungen aus NaCl und KCl.

Im Fall einer äquimolaren Mischung von NaCl und KCl entspricht ein Molverhältnis von Alkalichlorid zu Eisen von 1:1 einem Gewichtsverhältnis von 1,19:1. Daher wird in diesem Fall das Gewichtsverhältnis von Alkalichlorid zu Eisen im Rohstoff in der Reaktionsmischung im Reaktor vorzugsweise so eingestellt, dass es stets ≥ 54:1 ist, vorzugsweise ≥ 57:1, und insbesondere bei 58:1 gehalten wird. Als Chlorierungsmittel wird im erfindungsgemäßen Verfahren vorzugsweise elementares Chlor (Cl₂) verwendet.

Als Siliziumquelle kann erfindungsgemäß jede Siliziumquelle verwendet werden, die auch im herkömmlichen Verfahren zur Herstellung von SG-Si eingesetzt wird, z.B. MG-Si unterschiedlicher Reinheit. Alternativ kann aber vorzugsweise auch Ferrosilizium unterschiedlicher Reinheit als kostengünstigeres Ausgangsmaterial verwendet werden.

Ohne an die nachfolgende Erklärung gebunden zu sein, ist ein möglicher Grund für den beobachteten erfindungsgemäßen Effekt, dass die Zugabe von Alkalichlorid im erfindungsgemäßen Überschuss zu den Beimischungen in der Siliziumquelle die Umwandlung des leicht flüchtigen FeCl₃ in schwer flüchtige Komplexsalze in der Schmelze bewirkt. Bei Verwendung von NaCl und/oder KCl als Alkalichlorid(e) sind diese beispielsweise Na(K)FeCl₄ und Na(K)FeCl₃. Dadurch wird die Abgabe von Eisenchlorid in das Bampf-Gas-Gemisch (DGG) und somit in das erzeugte STC deutlich verringert. Ebenso werden durch den erhöhten Eintrag von Alkalichlorid in die Schmelze andere Metalle, die als Verunreinigungen in den eingesetzten Rohstoffen in die Schmelze eingebracht werden, gebunden und in der Schmelze zurückgehalten.

Folglich wird die Schmelze durch den Alkalichlorid-Überschuss zusätzlich zu ihrer primären Funktion als "Chlorierungsmedium" zu einem "Filter", der das Entweichen von unerwünschten Chloriden in das gasförmige Reaktionsprodukt effektiv unterdrückt.

Die Analyse der Zusammensetzung der Schmelze hat gezeigt, dass bei dem erfindungsgemäßen Überschuss von Alkalichlorid zu Eisen der Anteil an Eisenchlorid im gebildeten STC ≤ 2 Gew.% beträgt. Mit steigendem Verhältnis von Alkalichlorid zu Eisen in der Rohstoffmischung nimmt der Gehalt an Eisenchlorid in STC stark ab (siehe Tabelle 2).

Zur Durchführung des erfindungsgemäßen Verfahrens kann beispielsweise eine aus dem Stand der Technik zur Titandioxidchlorierung bekannte Chlorierungsanlage verwendet werden. Diese umfasst als Reaktionsgefäß einen Chlorator, der üblicherweise im unteren Bereich eine konische Formgebung aufweist, und vorzugsweise mehrere Kondensationssysteme zur Auftrennung des als Dampf-Gas-Gemisch (DGG) anfallenden Produktstroms . Im Chlorator wird eine Alkalichlorid-Schmelze mit einer Schmelztemperatur von 600-800°C erzeugt. In die Schmelze wird durch Düsen im konischen Teil des Chloratorbodens Chlor eingeblasen. Die Zugabe des Einsatzstoffes (Ferrosilizium und Alkalichlorid) erfolgt über eine Dosieranlage von oben in die Schmelze, z.B. über eine im Deckel des Chlorators installierte Dosiervorrichtung.

Der Einsatzstoff für die Chlorierung der Alkalichloride in der Schmelze umfasst die Komponenten Ferrosilizium und Alkalichlorid. Beide Bestandteile werden auf eine Korngröße von ca. 0,1 mm zerkleinert. Der erforderliche jeweilige Gewichtsanteil der Komponenten wird durch den Eisengehalt im Ferrosilizium unter Berücksichtigung des gewünschten Überschusses an Alkalichlorid gegenüber gebildetem Eisenchlorid in der Schmelze bestimmt.

Das als Produktstrom entstehende DGG wird über der Schmelze am Deckel des Chlorators abgezogen und schrittweise in Abhängigkeit von den Siedepunkten der einzelnen gebildeten Chlorierungsprodukte in den Kondensa.tionsvor-richtungen kondensiert. Dadurch erfolgt eine Trennung von festen, flüssigen und gasförmigen Produkten der Chlorierung. Das erhaltene technische Siliziumtetrachlorid (STC) hat eine für die Erzeugung von Polysilizium erforderliche Reinheit, oder muss nur noch geringfügig aufgereinigt werden, und kann nach Konvertierung zum Trichlorsilan (TCS) in den Erzeugungsprozess eingebunden werden. Damit kann die gesamte Reinigungskette für Trichlorsilan eingespart oder zumindest erheblich vereinfacht/reduziert werden, wodurch die erforderlichen Investitions- und Betriebskosten wesentlich verringert werden können.

### Beispiele

Das erfindungsgemäße Verfahren wurde in einer Laboranlage aus Quarzglas mit einer Neun-Produktionsleistung von 1 kg STC/h getestet. Die Laboranlage bestand aus folgenden Komponenten:
- Chlorzufuhranlage
- Vorratsbehälter für Alkalichlorid, Silizium bzw. Ferrosilizium und Chlor
- elektrischer Ofen mit automatischer Temperaturregelung
- Chlorator
- Kondensationssystem, umfassend einen wassergekühlten Zwei-Wege-Kondersator und einen mit Salz-Eis-Gemisch gekühlten Tieftemperatur-Kondensator.
- Vorratsbehälter für STC
- Abgasreinigungsanlage.

Die Chlorierungsanlage wurde in einem Schrank mit Luftabzug und Luftreinigung installiert. Der Chlorator befand sich in dem elektrischen Ofen.

Die Chlorzufuhr erfolgte aus einem Hochdruck-Chlorbehälter unter Regelung von Druck und der Durchflussmenge. Das Chlor wurde zunächst durch ein Bad aus rauchender Schwefelsäure (Oleum) und dann durch einen Trockner mit Kieselgel geleitet und so vollständig entfeuchtet. Zur Entfernung von eventuell verbliebenen Oleum-Tröpfchen wurde es anschließend durch einen. Absorber-Puffer geführt und dann in den Chlorator geleitet.

Das aus dem Chlorator abgeführte DGG wurde zunächst durch den wassergekühlten 2wei-Wege-Kondensator geleitet. Im Kondensator erfolgte eine partiale Kondensation der Komponenten des Gasgemisches, wobei STC in technischer Reinheit (ohne weiterer Destillation) entstand und in einem Sammelbehälter aufgefangen wurde.

Die nicht kondensierten Dämpfe und Gase wurden nach sekundärer Kühlung und Kondensation im Tieftemperatur-Kondensator bei -20°C weiter kondensiert und zurückgewonnen. Das Kondensat von STC wurde in einem weiteren Sammelbehälter aufgefangen. Die nicht kondensierten Gase wurden aus dem Tieftemperatur-Kondensator in ein Abgasreinigungssystem geleitet, das aus einer Auffangwanne zur Abscheidung von Tropfen und einem Wasserwäscher mit einer alkalischen Lösung zur Neutralisation von Säuren im Abgas bestand.

Ein Gemisch von 350 g einer äquimolaren NaCl/KCl-Mischung wurde in den Chlorator eingewogen und bis zum Schmelzen erhitzt. Nach Einstellung der Schmelztemperatur wurde die Schmelze im Chlorator für 10-15 Minuten mit 90 L/h Chlor gespült. Die Chlorierung wurde bei einer Temperatur von 750°C durchgeführt.

Im Kondensationssystem wurden der Zwei-Wege-Kondensator mit Wasser von 12°C und der Tieftemperatur-Kondensator mit einem Salz-Eis-Gemisch von -20°C gekühlt.

Zur Durchführung des erfindungsgemäßen Verfahrens wurde der Einsatzstoff mit vorbestimmter Zusammensetzung von oben auf den Spiegel der Schmelze im Chlorator eingebracht, und gleichzeitig wurde Chlor in einer Menge von 90 L/h Chlor unterhalb der Schmelze über den Chloratorboden zugeführt.

Der Einsatzstoff, bestehend aus einer äquimolaren NaCl/KCl-Mischung und Siliziumrnhstaff (Ferrosilizium FeSi-90, Fe-Gehalt 3,47 Gew.-%) in verschieden Verhältnissen, wurde in Portionen von 40-50 g alle 15 Minuten in den Reaktor eingebracht.

Im Laufe der Untersuchung wurden die Temperatur im Chlorator, die Zeit vom Beginn des Chlorierungsprozesses, der Chlordurchfluss (gesteuert über ein Regelventil), der Durchbruch von Chlor in die Abgase (Bestimmung erfolgte durch die Freisetzung von Jod aus einem Marker mit Kaliumjodid) sowie das Gewicht und Volumen des gewonnenen STC überwacht bzw. bestimmt. Nach Abschluss des Experiments wurde der Restsiliziumgehalt in der Schmelze sowie der Gehalt an Verunreinigungen im STC mit Hilfe eines Massenspektrometers mit induktiv gekoppeltem Plasma (Typ Agilent 7500cx von Agilent Technologies) im Labor ermittelt.

Nach der obigen Vorgehensweise wurden drei Versuche 1-3 durchgeführt, in denen unter sonst gleichen Bedingungen das Verhältnis von Alkalichlorid zur Siliziumquelle im Einsatzstoff, wie in Tabelle 1 gezeigt, verändert wurde. Die Zusammensetzung des in den Versuchen erhaltenen SiCl₄ (STC) ist in Tabelle 2 dargestellt.

**Tabelle 1: Zusammensetzung des Einsatzstoffes (Gewichtsverhältnis)**

| **Versuch** | **[NaCl+KCl] : [Fe im FeSi 90]** | | **FeSi 90* [g]** | **NaCl+KCl [g]** |
|---|---|---|---|---|
| | **Gewichts-Verhältnis** | **Mol-verhältniss** | | |
| 1 | **54 : 1** | **45 : 1** | 15 | 28,07 |
| 2 | **58 : 1** | **49 : 1** | 15 | 30,41 |
| 3 | **63 : 1** | **53 : 1** | 15 | 32,73 |

| | | | | |
|---|---|---|---|---|
| *Fe-Gehalt im Ferrosilizium im vorliegenden Versuch 3,47 Gew, % | | | | |

**Tabelle 2: Zusammensetzung des erhaltenen STC (in Gew.%)**

| **Vers.** | **Ti** | **Fe** | **FeCl₃^{#}** | **Al** | **Ca** | **POCl₂** | **S₂Cl₂** | **Cl₂** |
|---|---|---|---|---|---|---|---|---|
| 1 | 0,0021 | 0,384 | 1,11 | 0,068 | 0,008 | 0,002 | 0,002 | 0,077 |
| 2 | 0,0010 | 0,222 | 0,64 | 0,051 | 0,006 | 0,002 | 0,002 | 0,065 |
| 3 | 0,0012 | 0,216 | 0,63 | 0,047 | 0,006 | 0,002 | 0,002 | 0,058 |

| | | | | | | | | |
|---|---|---|---|---|---|---|---|---|
| # Berechnet aus Fe-Gehalt | | | | | | | | |

Aus den Versuchsergebnissen ist ersichtlich, dass der erfindungsgemäße Überschuss an Alkalichlorid eine hohe Qualität (Reinheit) des nach dem erfindungsgemäßen Verfahren hergestellten SiCl₄ ermöglicht, wobei die Erhöhung des Alkalichlarid/Fe-Gewichtsverhältnisses von 54 auf 58 bzw. 63 (Versuche 2 und 3) die Qualität des STC weiter deutlich verbessert. Diese erhöhte Reinheit zieht folgende Vorteile nach sich:
- Das erfindungsgemäße Verfahren erlaubt eine wesentliche Kostenreduktion bei der Herstellung von SG-Si:
   Durch die Nutzung von alternativen, kostengünstigen Rohstoffen, wie etwa metallurgischem Silizium geringer Reinheit oder sogar Ferrosilizium, und durch die Vereinfachung des Produktionsprozesses (Abbildung 1) können die Kosten entscheidend gesenkt werden.
   Ferner werden im herkömmlichen Verfahren bei der Erzeugung von TCS etwa 20% STC gebildet, so dass zwei getrennte Reinigungsanlagen für STC und TCS erforderlich sind (Abbildung 1). Im erfindungsgemäßen Verfahren wird dagegen zu 99 % STC gebildet. Die Begleitverbindungen werden vom STC getrennt und als Recyklat zur Kühlung des Salzschmelzreaktors zurückgeführt (Abbildung 1). Die Reinigung von STC kann verglichen mit TCS wesentlich einfacher und mit einer geringeren Anzahl an Trennstufen durchgeführt werden. Auch hierdurch können die Kosten erheblich gesenkt werden.
   Schließlich führt auch die Verringerung der Verfahrensschritte insgesamt zu einer signifikanten Senkung der Investitionskosten und des im Betrieb erforderlichen Energieeinsatzes.
- Die genannten alternativen Rohstoffe sind in ausreichenden Mengen am Markt verfügbar und unterliegen geringeren Anforderungen als das hochreine metallurgische Silizium (MG-Si 98,8), das im konventionellen Verfahren verwendet wird. Eine Rahstoffverknappung kann daher vermieden werden.
- Ein weiterer Vorteil des neuen Verfahrens ergibt sich aus der Tatsache, dass bei der STC-Erzeugung kaum abtrennbare Poly(chlorsilan)-Verbindungen gebildet werden. Die Trennung des TCS von diesen Polyfchlorsilan)-Verbindungen erfordert im konventionellen Verfahren einen hohen energetischen Aufwand, bei gleichzeitig hohem Verbrauch von Neutralisierungsstoffen. Das neue Verfahren benötigt keine Neutralisierungsstoffe. Die Salzschmelze kann im Prozess gereinigt und wiederverwertet werden. Dadurch ist das neue Verfahren nahezu abfallfrei und wesentlich umweltfreundlicher als das konventionelle Verfahren.

## Patentansprüche

1. Verfahren zur Herstellung von Siliziumtetrachlorid (STC), umfassend die Chlorierung einer Siliziumquelle, ausgewählt aus Ferrosilizium und metallurgischem Silizium, in einer Alkalichlorid-Schmelze bei einer Temperatur im Bereich von deren Schmelztemperatur bis 900°C in einem Chlorierungsreaktor, wobei der Alkalichlorid-Schmelze kontinuierlich oder intermittierend Reaktionsmaterial, das Alkalichlorid und Siliziumquelle umfasst, in einer solchen Weise zugeführt wird, dass in der Reaktionsmischung im Reaktor stets ein mehrfacher Überschuss an Alkalichlorid gegenüber Eisen (Fe) vorliegt.

2. Verfahren nach Anspruch 1, wobei das Molverhältnis von Alkalichlorid zu Eisen in der dem Reaktor zugeführten Reaktionsmischung ≥ 45:1, vorzugweise ≥ 48:1 ist.

3. Verfahren nach mindestens einem der Ansprüche 1-2, wobei das Molverhältnis von Alkalichlorid zu Eisen in der dem Reaktor zugeführten Reaktionsmischung ≥ 53:1 ist, vorzugsweise ≤ 50:1, und weiter bevorzugt bei 49:1 gehalten wird.

4. Verfahren nach mindestens einem der Ansprüche 1-3, wobei kontinuierlich oder intermittierend ein Teil der Schmelze entnommen wird.

5. Verfahren nach Anspruch 4, wobei die entnommene Schmelze von bei der Chlorierung gebildetem Eisenchlorid gereinigt und das resultierende Alkalichlorid in das Verfahren recycliert wird.

6. Verfahren nach Anspruch 4 oder 5, wobei
- die Entnahme der Schmelze kontinuierlich erfolgt und die Menge des Eisens in der entnommenen Schmelze der Menge des Eisens entspricht, die über zugeführte Materialien in die Reaktionsmischung im Reaktor eingetragen werden; oder
- die Entnahme der Schmelze intermittierend erfolgt und die Menge des Eisens in der entnommenen Schmelze im zeitlichen Mittel der Menge des Eisens entspricht, die über zugeführte Materialien in die Reaktionsmischung im Reaktor eingetragen werden.

7. Verfahren nach mindestens einem der Ansprüche 1-6, wobei das Alkalichlorid ausgewählt ist aus NaCl, KC1 und beliebigen Mischungen daraus.

8. Verfahren nach Anspruch 7, wobei das Alkalichlorid eine äquimolare Mischung aus NaCl und KCl ist.

9. Verfahren nach Anspruch 8, wobei das Gewichtsverhältnis von Alkalichlorid zu Eisen in der Reaktionsmischung im Reaktor stets ≥ 54:1, vorzugsweise ≥ 57:1 ist.

10. Verfahren nach Anspruch 8 oder 9, wobei das Gewichtsverhältnis von Alkalichlorid zu Eisen in der dem Reaktor zugeführten Reaktionsmischung ≤ 63:1 ist, vorzugsweise ≤ 60:1, und weiter bevorzugt bei 58:1 gehalten wird.

11. Verfahren nach mindestens einem der Ansprüche 1-10, wobei die aus der Reaktionsmischung im Reaktor austretenden gasförmigen Produkte zumindest teilweise kondensiert und zumindest teilweise in die Reaktionsmischung im Reaktor zurückgeführt werden.

12. Verfahren nach mindestens einem der Ansprüche 1-11, wobei als Chlorierungsmittel elementares Chlor (Cl₂) verwendet wird.

13. Verfahren nach mindestens einem der Ansprüche 1-12, wobei das Chlorierungsmittel von unten in die Schmelze im Reaktor eingeblasen wird.

14. Verfahren nach mindestens einem der Ansprüche 1-13, wobei das gebildete STC abgetrennt, gereinigt und zur Herstellung von Solarsilizium (SG-Si) verwendet wird.

15. Verfahren zur Herstellung von Solarsilizium (SG-Si) oder Halbleitersilizium, das folgende Schritte umfasst:
(i) die Herstellung von Siliziumtetrachlorid (STC) nach dem Verfahren gemäß mindestens einem der Ansprüche 1-14;
(ii) die Umsetzung des erhaltenen STC zu Trichlorsilan (TCS) durch Hydrierung; und
(iii) die Umsetzung des erhaltenen TCS zu SG-Si nach einem bekannten Verfahren, vorzugsweise nach einem Siemens-Verfahren unter Umsetzung des TCS mit Wasserstoff und Abscheidung von polykristallinem SG-Si auf dünnen Vorlagestäben bei hohen Temperaturen in einer Gasatmosphäre.
